(19) **Europäisches Patentamt European Patent Office Office européen des brevets**

(11) **EP 2 834 277 B1**

(12) **FASCICULE DE BREVET EUROPEEN**

(45) Date de publication et mention de la délivrance du brevet:
**10.01.2018 Bulletin 2018/02**

(21) Numéro de dépôt: **13713893.9**

(22) Date de dépôt: **03.04.2013**

(51) Int Cl.:
*C08F 4/40* [(2006.01)]     *C08F 20/06* [(2006.01)]

(86) Numéro de dépôt international:
**PCT/EP2013/056996**

(87) Numéro de publication internationale:
**WO 2013/150056 (10.10.2013 Gazette 2013/41)**

(54) **PROCEDE DE SYNTHESE DE POLYMERES A PARTIR D'ACIDE ACRYLIQUE, D'UN DE SES SELS OU DE LEUR MELANGE**

VERFAHREN ZUR SYNTHESE VON POLYMEREN AUS ACRYLSÄURE, EINER DER SALZE DARAUS ODER EINES GEMISCHES DARAUS

METHOD FOR SYNTHESISING POLYMERS FROM ACRYLIC ACID, ONE OF THE SALTS OF SAME OR THE MIXTURE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2012 FR 1253110**

(43) Date de publication de la demande:
**11.02.2015 Bulletin 2015/07**

(73) Titulaire: **Rhodia Operations 75009 Paris (FR)**

(72) Inventeurs:
• **FERLIN, Patrick**
  **F-75019 Paris (FR)**
• **WILSON, James**
  **F-60580 Coye-la-Foret (FR)**
• **BENACHICH, Fadila**
  **F-92130 Issy-les-Moulineaux (FR)**

(74) Mandataire: **Cordier, Pascal Christian Rhodia Operations Direction de la Propriété Industrielle 40, rue de la Haie Coq 93306 Aubervilliers (FR)**

(56) Documents cités:
**EP-A2- 0 713 890     FR-A1- 2 969 155**
**US-A- 3 493 500     US-A- 3 658 772**

**EP 2 834 277 B1**

**Description**

La présente invention concerne un procédé de préparation de polymères à partir d'acide acrylique, d'un de ses sels ou de leur mélange.

Plus précisément, la présente invention a pour objet un procédé de préparation d'un polymère comprenant une étape de polymérisation radicalaire de monomères comprenant au moins des monomères (M1) choisis parmi l'acide acrylique, l'un de ses sels, ou leur mélange, dans lequel ladite étape de polymérisation radicalaire est réalisée :

- en continu ;

- à un pH qui reste compris de 3 à 5 durant l'étape de polymérisation ;

- en présence d'un couple redox métabisulfite /persulfate, à titre d'amorceur radicalaire, avec un ratio molaire métabisulfite /persulfate compris de 1 à 3,5 et un pourcentage molaire amorceur/monomères compris de 5% à 18%.

Les travaux qui ont conduit à la présente invention ont été subventionnés par l'Union Européenne dans le cadre du 7ème programme-cadre au titre de la convention de subvention (Grant Agreement) NMP2-LA-2009-228867.

Les travaux qui ont été réalisés par les inventeurs dans le cadre de la présente invention ont maintenant permis de mettre en évidence que, dans les conditions spécifiques définies ci-dessous, la polymérisation radicalaire conduit, de façon avantageuse, à des polymères de type polyacrylates qui présentent de faibles masse moléculaire en masse ($M_w$), typiquement inférieures à 10 000 g/mol, voire inférieures à 7500 g/mol.

De plus, il s'avère que les conditions spécifiques de mise en oeuvre du procédé de l'invention permettent d'achever la polymérisation en un temps très court (typiquement en moins de quelques minutes), autorisant de ce fait la conduction du procédé avec un temps de séjour très faible dans le réacteur, ce qui se traduit notamment en termes de coûts de procédé réduits.

Notamment compte tenu de ces avantages, le procédé de l'invention fournit une voie d'accès efficace et économique à des polymères de type polyacrylate.

Dans le cadre de la présente description, on utilise un couple rédox métabisulfite/persulfate. Le métabisulfite est typiquement introduit sous forme de métabisulfite de sodium. Le persulfate est quant à lui généralement introduit sous forme de persulfate de métal alcalin (sodium ou potassium), de persulfate de métal alcalino-terreux ou de persulfate ammonium. Le couple redox employé peut typiquement être le couple métabisulfite de sodium/persulfate de sodium. Sauf mention contraire, le terme « amorceur » ou « amorceur radicalaire » désigne le couple métabisulfite /persulfate employé dans l'étape de polymérisation radicalaire, ce terme englobant le métabisulfite et le persulfate.

Les sels de l'acide acrylique qui peuvent être utilisés dans l'étape de polymérisation de l'invention peuvent notamment être choisis parmi l'acrylate de sodium, l'acrylate de potassium, l'acrylate d'ammonium et l'acrylate de lithium.

Selon un mode de réalisation particulier, le sel de l'acide acrylique employé dans l'étape de polymérisation est l'acrylate de sodium.

Au sens de la présente description, on désigne par «monomère (M1) » le monomère tel qu'il se présent dans les conditions de pH de l'étape de polymérisation. Le monomère (M1) peut être l'acide acrylique, l'un de ses sels ou bien un mélange d'acide acrylique et d'au moins un sel d'acide acrylique ou un mélange de plusieurs sels d'acide acrylique. Par exemple, à un pH égal au pKa de l'acide acrylique, le monomère (M1) est sous forme d'un mélange d'acide acrylique et d'au moins un de ses sels, tel que l'acrylate de sodium, dans des proportions équivalentes.

Selon un mode de réalisation particulier, le monomère (M1) est sous la forme d'un mélange acide acrylique/acrylate de sodium.

Selon le procédé de l'invention, la réaction de polymérisation peut être effectuée en présence d'un ou plusieurs monomère(s) autres que l'acide acrylique, les sels d'acide acryliques et les mélanges de ces composés.

La réaction de polymérisation radicalaire peut notamment être effectuée en présence d'au moins un monomère (M2) différent du monomère (M1) et différent de l'acide acrylique, de l'un de ses sels, ou de leur mélange.

De préférence, le monomère (M2) est un monomère possédant une ou plusieurs fonctions ou groupes choisis dans le groupe constitué de : acide carboxylique ; sulfonate ; sulfate; phosphonate ; phosphate ; hydroxyle ; amine primaire, secondaire, tertiaire ou quaternaire ; lactame ; amide ; éthylène glycol ou oxyde de polyalkylène ; carboxybétaïne, sulfobétaïne et phosphobétaïnes.

Selon un mode de réalisation particulier, le monomère (M2) est choisi dans le groupe constitué de : (méth)acrylamide, diméthylacrylamide, morpholine N-oxide acrylamide, diacétone acrylamide, diméthylaminopropylacrylamide, chlorhydrate de N-(2-aminoéthyl) méthacrylamide, N-(hydroxyméthyl)acrylamide, N-(2-hydroxypropyl)méthacrylamide, N-hydroxyéthylacrylamide, N-[tris(hydroxyméthyl)méthacrylamide, 4-acryloylmorpholine, 2-N-morpholinoéthyle méthacrylate, N-vinyle pyrollidone, méthacrylamide, (méth)acrylate de polyéthylène glycol, (méth)acrylate de diéthylène glycol, di(éthylène glycol) éthyl éther acrylate, acrylate de 2-(diéthylamino)éthyle, acrylate de 2-(diméthylamino)éthyle, acrylate de 3-(diméthylamino)propyle, dipentaérythritol penta-/hexa-acrylate, acrylate de 2-éthoxyéthyle , éthylène glycol méthyl éther acrylate, acrylate de 2-hydroxyéthyle, acrylate d'hydroxypropyle, acrylate de poly(alkylène glycol), acrylate de 2-chloroéthyle, acrylate de tétrahydrofurfuryle, vinyl acétamide, vinyl formamide, vinyl imidazole, vinyl pyridine, diallylamine, N-méthyl-N-vinylacétamide, acide 3-butène-1,2,3-tricarboxylique, acide vinyl benzoïque , acrylate de beta-carboxy éthyle, acide méthacrylique, acide maléique, acide succinnique, acide itaconique, chlorure de [2-(acryloyloxy)éthyl]triméthyl-lammonium, chlorure de diallyldiméthylammonium, chlorure de (méth)acrylamidopropyl-triméthylammonium, (méth)acrylate de 3-sulfopropyle, acide 2-propène-1-sulfonique, 1-allyloxy-2 hydroxypropyle sulfonate de sodium (COPS1), acide 2-acrylamido-2-méthyle propane sulfonique, sulfonate de (méth)allyle, vinyle sulfonate de sodium, sodium styrène sulfonate, 3-sulfopropyldiméthyl-3-méthacrylamidopropylammonium, N-(2-méthacryloyloxyéthyl)-N,N-diméthyl-N-(3-sulfopropyl)ammoniumbétaine, N-(2-1-(3-sulfopropyl)-2-vinylpyridiniumbétaine, phosphate de monoacryloxyéthyle, phosphate de bis(2-méthacryloxyéthyle), Sipomer PAM 100, 200, 400, 5000 (vendu par Rhodia Solvay), acide vinyle phosphonique, acide isopropyle phosphonique, phosphonate de diallyle aminométhylène.

Dans le cadre de l'invention, et sauf mention contraire, les expressions « comprenant de x à y» signifient que les bornes x et y sont incluses. Par exemple, « un ratio compris de 0,17 à 19 » signifie que le ratio est supérieur ou égal à 0,17 et inférieur ou égal à 19.

Selon un mode de réalisation, l'étape de polymérisation radicalaire de l'invention est effectuée à un pH compris de 3,5 à 5, de préférence de 4,0 à 5, et préférentiellement de 4,4 à 4,9.

Le métabisulfite de sodium ($Na_2S_2O_5$) présente un équilibre entre différentes espèces selon la valeur du pH. Plus le pH augmente, et plus l'équilibre se déplace vers l'espèce $Na_2SO_3$, tandis que plus le pH diminue, plus l'équilibre se déplace vers l'espèce $SO_2$.

La gamme de pH à laquelle est conduite l'étape de polymérisation radicalaire du procédé de la présente invention correspond à des conditions où :

- la formation de $SO_2$ est limitée, ce qui permet d'éviter la formation de bulles qui formées peuvent engendrer des disparités en terme de distribution de temps de séjour et des problèmes potentiels de contrôle de la réaction ;et
- la formation de produits secondaires tels que le produit d'addition de Michaël obtenu par réaction entre l'acide acrylique et $NaHSO_3$ sont évités.

Selon un mode de réalisation préférentiel, dans l'étape de polymérisation, le ratio molaire entre le métabisulfite et le persulfate est compris de 1 à 2,5, préférentiellement inférieur ou égal à 2.

Selon une variante intéressante, dans l'étape de polymérisation du procédé de l'invention, le pourcentage molaire amorceur/monomère(s) est compris de 3% à 10%, de préférence de 4% à 9%, et préférentiellement de 6% à 8,5%.

Selon l'invention, les monomères employés peuvent être uniquement des monomères (M1), ou bien un mélange de monomères (M1) avec d'autres monomères (M2).

Ainsi, le pourcentage molaire amorceur/monomères correspond au pourcentage molaire (métabisulfite de sodium et persulfate de sodium)/(M1) lorsque seuls des monomères (M1) sont utilisés, et au pourcentage molaire (métabisulfite de sodium et persulfate de sodium)/(M1 et M2) lorsque des monomères (M2) autres que les monomères (M1) sont utilisés .

Selon un mode de réalisation, l'étape de polymérisation est effectuée à un pH de 4,2 à 4,9, par exemple à environ 4,5 ou à environ 4,8.

Selon un mode de réalisation, l'étape de polymérisation est effectuée à un ratio molaire métabisulfite / persulfate de 1 à 2.

Selon un mode de réalisation, l'étape de polymérisation est effectuée à un pourcentage molaire amorceur/monomère(s) d'environ 7%.

Selon un mode de réalisation, l'étape de polymérisation est effectuée dans les conditions suivantes :

- pH : 4,8,
- ratio molaire métabisulfite /persulfate: 1,90,
- pourcentage molaire amorceur/monomère(s) : 7%.

Selon un mode de réalisation, l'étape de polymérisation est effectuée dans les conditions suivantes :

- pH : 4,46,
- ratio molaire métabisulfite de sodium/persulfate de sodium : 1,90,
- pourcentage molaire amorceur/monomère(s) : 7%.

Selon un mode de réalisation, l'étape de polymérisation est effectuée dans les conditions suivantes :

- pH : 4,5,
- ratio molaire métabisulfite de sodium/persulfate de sodium : 2,
- pourcentage molaire amorceur/monomère(s) : 7%.

Dans le cadre la présente description, on désigne par « teneur en réactifs », le rapport de la somme des débits massiques de chacun des réactifs utilisés dans l'étape de polymérisation radicalaire de l'invention rapportée à la somme totale des débits massiques entrant dans le réacteur. Les réactifs auxquels il est fait référence consistent en le ou les monomère(s), le métabisulfite et le persulfate. Le débit massique d'un réactif donné correspond au rapport de la masse dudit réactif introduite dans le réacteur par unité de temps, en excluant la masse de l'éventuel solvant le véhiculant (typiquement de l'eau). Ainsi, la teneur en réactif est typiquement calculée par le rapport suivant :

(somme totale des débits massiques entrant dans le réacteur – somme des débits massiques de solvant entrant dans le réacteur) / (somme totale des débits massiques entrant dans le réacteur).

Cette teneur en réactif correspond à l'extrait sec théorique du polymère obtenu à l'issue de l'étape de polymérisation (pour un rendement de 100%). L'extrait sec réel à la fin de la réaction de polymérisation, qui est déterminé très simplement, en éliminant par chauffage les composés liquides volatils (eau, éventuels résidus d'acide acrylique par exemple) est en général très proche de cette valeur théorique.
De préférence, l'étape de polymérisation est réalisée avec une teneur en réactifs comprise de 30% à 65%. Notamment pour obtenir un bon compromis entre une vitesse de polymérisation élevée et une bonne évacuation de la chaleur formée, cette teneur en réactifs est de préférence de 40% à 55%, par exemple de 40% à 48% en masse.
Dans le cadre de la présente description, et sauf mention contraire, on entend par « vitesse de polymérisation », la vitesse à laquelle les monomères sont consommés. Par ailleurs, on entend ici par « débit de production du polymère », la quantité en masse de polymère produite par unité de temps.
Selon un mode de réalisation, l'étape de polymérisation est réalisée à une température qui reste comprise de 30 °C à 100 °C pendant toute la durée de la polymérisation. Cette étape de polymérisation étant exothermique, la température tend généralement à augmenter lors de la polymérisation. Il est préférable que la polymérisation débute à une température inférieure ou égale à 80°C, par exemple entre 50°C et 80°C. Typiquement la température reste inférieure ou égale à 95°C, plus préférentiellement inférieure ou égale à 85°C durant toute l'étape de polymérisation. Selon un mode de réalisation avantageux, la température n'augmente pas de plus de 10°C, voire pas de plus de 5°C durant la polymérisation.
Typiquement, l'étape de polymérisation peut être effectuée dans tout réacteur permettant un temps de séjour court, typiquement inférieur à 5 minutes, et une évacuation efficace de la chaleur. En particulier, l'étape de polymérisation est effectuée dans un réacteur ayant un ratio surface/volume élevé.
Dans le cadre de l'invention, et sauf mention contraire, le « temps de séjour » correspond au temps compris entre la mise en contact de tous les réactifs dans le réacteur, jusqu'à la sortie dudit réacteur du polymère obtenu. En pratique, ce temps de séjour est calculé très simplement, par le rapport du volume du réacteur sur le débit volumique en sortie du réacteur.
Dans le cadre de l'invention, et sauf mention contraire, on entend par « réactifs », l'ensemble des amorceurs et monomères utilisés pour la réaction de polymérisation. En particulier, on peut citer le métabisulfite, le persulfate, l'acide acrylique, l'acrylate de sodium ou le mélange acide acrylique/acrylate de sodium.
Selon l'invention, l'étape de polymérisation peut être effectuée dans un réacteur choisi parmi : un réacteur à plaques, un réacteur tubulaire, ou un micro-réacteur adapté.
Selon un mode de réalisation, la réaction de polymérisation est effectuée dans un réacteur tubulaire.
Typiquement, les réacteurs de polymérisation peuvent comprendre au moins un mélangeur statique, permettant d'améliorer le transfert de chaleur et le mélange des réactifs (amorceur, monomère(s)) au sein du réacteur.
En particulier, le réacteur tubulaire comprend au moins un mélangeur statique, tel qu'un mélangeur statique avec refroidissement interne.
La polymérisation selon l'invention est généralement réalisée en injectant les monomères et l'amorceur sous forme de différents flux injectés dans le réacteur, comprenant chacun une solution comprenant au moins un composé choisi parmi un monomère, un persulfate ou un métabisulfite. Selon certains modes de réalisation, on peut injecter un ou plusieurs flux contenant uniquement de l'eau de dilution, qui permet notamment d'ajuster la teneur en extrait sec dans le réacteur.
Selon l'invention, le ou les monomère(s), éventuellement dilué(s) avec de l'eau de dilution, peut(vent) être chauffés à la température de la réaction par introduction dans une enceinte thermostatée an aval du réacteur, avant injection dans ledit réacteur.

Typiquement, le métabisulfite et le persulfate sont injectés sous formes de deux flux distincts (sans mélanges initial de métabisulfite et de persulfate dans aucun des deux flux), la mise en présence du métabisulfite et du persulfate s'opérant de préférence en aval de l'injection des monomères, en général après avoir porté le flux comprenant les monomères à la température de réaction.

Selon un premier mode de réalisation possible, le persulfate et le métabisulfite sont introduits sous forme de deux flux distincts qui sont injectés dans un flux comprenant les monomères à la température de réaction, en un même point d'injection.

Selon un autre mode de réalisation, on introduit les monomères et le persulfate, sans métabisulfite, dans une première zone du réacteur, typiquement sous la forme de deux flux séparés, et, en aval de cette première zone introduction des monomères et du persulfate, on injecte un flux comprenant le métabisulfite dans le flux comprenant les monomères et le persulfate porté à la température de réaction. Typiquement, selon cette variante, le persulfate est injecté sans métabisulfite en un premier point d'injection dans un flux comprenant les monomères, et, en aval de ce premier point d'injection du persulfate, le métabisulfite est injecté en un second point d'injection, dans le flux contenant les monomères et le persulfate.

Alternativement, selon encore un autre mode envisageable, on introduit les monomères et le métabisulfite, sans persulfate, dans une première zone du réacteur, et , en aval de cette première zone d'introduction des monomères et du métabisulfite, on injecte un flux comprenant le persulfate dans le flux comprenant les monomères et le métabisulfite porté à la température de réaction.

Selon un mode de réalisation, le métabisulfite employé dans l'étape de polymérisation de l'invention est un métabisulfite de sodium, de préférence injecté dans le réacteur sous forme de solution aqueuse.

Selon un mode de réalisation, le persulfate est un persulfate de métal alcalin (notamment de sodium ou de potassium) ou bien un persulfate d'ammonium, avantageusement injecté dans le réacteur sous forme d'une solution aqueuse. Il s'agit de préférence d'un persulfate de sodium injecté dans le réacteur sous forme d'une solution aqueuse.

Selon un mode de réalisation, le monomère (M1) est injecté dans le réacteur sous forme de solution aqueuse.

Alternativement, le monomère (M1) peut être injecté tel quel dans le réacteur sans être préalablement dilué dans l'eau. Selon ce mode alternatif, on injecte généralement de l'eau au sein du réacteur (de l'eau de dilution et/ou de l'eau solubilisant d'autres réactifs, comme les monomères (M2), les métabisulfites et/ou les persulfates).

De même, le(s) monomère(s) (M2) peut (peuvent) être injectés dans le réacteur sous forme de solution aqueuse ou bien sans être préalablement dilué(s) dans l'eau .

Le procédé de l'invention permet de réaliser l'étape de polymérisation avec une durée de réaction très courte, ce qui permet d'achever l'étape de polymérisation avec des temps de séjour dans le réacteur très faibles, qui peuvent typiquement être de moins de 5 minutes, le plus souvent de moins de 2 minutes, voire moins de une minute, et dans certains cas de moins de 50 s.

Dans le cadre de l'invention, et sauf mention contraire, on entend par « durée de la réaction de polymérisation » ou « temps de réaction », le temps compris entre la mise en contact des différents réactifs et la consommation d'au moins 95% de ces monomères. Au bout de cette durée conduisant à la consommation d'au moins 95% des monomères, la réaction est considérée comme « achevée » au sens de la présente description. Selon l'invention, la réaction de polymérisation est achevée avec une durée de réaction très courte, à savoir typiquement de moins de 5 minutes, de préférence de moins de 2 minutes, et préférentiellement de moins de 50 s, ce qui autorise les temps de séjour très court précités.

Le procédé de l'invention permet d'accéder à des polymères de type polyacrylates ou copolymères à base de monomères de type acrylates qui présente de faibles masses, par exemple une masse molaire moyenne en masse $(M_w)$ faible, typiquement inférieure à 10 000 g/mol, et de préférence inférieure à 7 500 g/mol par exemple comprise de 1 000 g/mol à 10 000 g/mol, notamment de 1 500 g/mol à 7 500 g/mol, et préférentiellement de 2 000 g/mol à 6 000 g/mol. Les valeurs de masse moléculaire $M_w$ peuvent être mesurées par GPC MALS.

Selon un mode de réalisation, le polymère obtenu comprend moins de 10% en masse de produits secondaires, tel que le produit issu de la réaction d'addition de Michael entre les monomères et certaines formes du métabisulfite dans l'eau, et de préférence moins de 5% en masse.

Le procédé selon l'invention peut comprendre, après l'étape de polymérisation radicalaire précitée, une étape supplémentaire de post-traitement du polymère obtenu. Ainsi, le polymère obtenu à l'issu du procédé selon l'invention peut être soumis à une étape supplémentaire de post-traitement réalisé en présence d'additifs, de biocides ou de bases, telles que NaOH.

Cette étape de traitement, aussi appelée étape de finition, peut être réalisée au sein du même réacteur que celui employé dans l'étape de polymérisation ou bien en dehors du réacteur.

Quel que soit le mode de mise en oeuvre du procédé de l'invention, la combinaison spécifique des gammes de pH, du couple réducteur/oxydant : métabisulfite de sodium/persulfate de sodium, de leur ratio molaire et du pourcentage molaire amorceur/monomère(s) selon l'invention, permet avantageusement et de manière surprenante de compléter la réaction de polymérisation en une durée très faible, typiquement inférieure à 5 minutes, voire inférieure à 1 minute.

De plus, cette combinaison spécifique de paramètres permet avantageusement d'obtenir des polymères de faible masse moléculaire en masse ($M_w$).

Le procédé selon l'invention présente en outre l'avantage de donner accès à des polymères présentant des quantités de produits secondaires très faibles, et donc des polymères présentant une pureté élevée.

La combinaison spécifique du pH, du ratio molaire et du pourcentage molaire selon l'invention, permet, de façon avantageuse, d'envisager de diminuer les dimensions des réacteurs, par rapport aux procédés de l'état de la technique.

Ainsi, le procédé selon l'invention s'avère une voie d'accès particulièrement efficace et économique à des polymères de type polyacrylate.

Les polymères de type polyacrylate obtenus selon l'invention peuvent être utilisés dans toutes les applications usuels de ce type de polymère, notamment à titre d'agents dispersant en milieu aqueux (par exemple pour améliorer la fluidité de pâtes pigmentaires concentrées, comme des pâtes pigmentaires de $TiO_2$).

Les exemples suivants permettent d'illustrer l'invention, sans toutefois la limiter.

## EXEMPLES

*Réacteur*

On a utilisé dans le cadre des exemples ci-après un réacteur tubulaire de type millifluidique, qui comporte un tube en téflon enroulé en spirale autour d'un cylindre métallique (30 spires). La température est contrôlée par un fluide caloporteur circulant au centre dudit cylindre, dans le sens inverse à l'écoulement des réactifs amenée à la température de la réaction (circulation, à contre courant, d'huile Gilotherm avec un débit maximal d'huile dans le cylindre - la température de ce fluide caloporteur est fixée à une valeur donnée dans chaque exemple). Un dispositif métallique encercle l'ensemble.

Le réacteur utilisé dans les exemples présente les caractéristiques suivantes :

Référence du tube : ETFE/TEZEL 1/8" x 0,093
Diamètre externe du tube : 1/8" = 3,2 mm
Diamètre interne du tube : 0,062" = 1,6 mm
Longueur totale du tube (réacteur) : 4,5 m
Volume du tube : 9 ml

L'entrée du tube est munie d'un double injecteur en T permettant l'injection conjointe dans le tube de deux flux, injectés chacun par une seringue munie d'un pousse-seringue injectant les flux avec deux débits constants dont les valeurs sont précisés dans les exemples ci-après. Les deux seringues contiennent respectivement :

- dans la première seringue reliée à l'entrée : une solution A, comprenant le ou les monomères, dont la composition est donnée ci-après pour chacun des exemples ; et

- dans la deuxième seringue reliée à l'entrée : de l'eau de dilution (désignée ci-après par A') qui est éventuellement introduite conjointement à la solution A dans certains des exemples (pour les autres exemples, le débit d'injection de l'eau de dilution A' est nul).

En aval de cette entrée, le tube est muni d'une zone d'injection permettant d'introduire, dans le flux contenant les monomères dont la température lors du passage dans la première partie du réacteur :

- une solution de persulfate (dite ci-après solution d'amorceur 1 ou solution B, dont la composition est donnée ci-après pour chacun des exemples) ; et

- une solution de métabisulfite (dite ci-après solution d'amorceur 2 ou solution C, dont la composition est donnée ci-après pour chacun des exemples)

Dans les exemples, les solutions B et C ont été injectées dans le flux en un même point, à l'aide d'un injecteur en croix, mais des résultats similaires sont obtenus en effectuant l'injection de la solution B en un premier point d'injection et l'injection de la solution C en un second point d'injection en aval du point d'injection de la solution B.

Dans chaque exemple, la polymérisation a été réalisée comme suit :

La solution A contenant le monomère a été introduite à l'entrée du réacteur avec éventuellement co-injection d'eau de dilution A', et les solutions B et C ont été injectées en aval.

Les solutions A, B et C, et l'eau de dilution le cas échéant, ont été injectés avec des débits constants précisés pour chacun des exemples ci-après.

Dans certains des exemples, de l'hydroquinone a été introduite en sortie du réacteur pour interrompre la réaction et pouvoir ainsi mesurer la conversion en sortie du réacteur.

### Exemple 1 : Préparation de polyacrylate (polymère P1)

1.1) Préparation des solutions

### Solution A

La solution de monomère est préparée par réaction d'acide acrylique (6,64 moles) avec une solution de soude aqueuse à 50% en masse et en présence d'eau de dilution visant à empêcher la cristallisation. Le pH de la solution de monomère obtenue est de 4,8.

La composition de la solution A obtenue est la suivante :

|  | moles | grammes |
|---|---|---|
| Acrylate de sodium | 2,35 | 220,9 |
| Acide Acrylique | 4,29 | 309,3 |
| Eau |  | 335,1 |

### Solution B (Amorceur 1 - Persulfate de sodium)

Une solution aqueuse à 19,8% en poids a été préparée par dilution de persulfate de sodium (14,85 g) dans 60,2 g d'eau. La solution a été dégazée sous vide pendant 10 minutes.

### Solution C (Amorceur 2 - Métabisulfite de sodium)

Une solution aqueuse à 15,7% en poids a été préparée par dilution de métabisulfite de sodium (11,75 g) dans 63,3 g d'eau. La solution a été dégazée sous vide pendant 10 minutes.

1.2) Polymérisation

La polymérisation a été effectuée dans les conditions suivantes :

- débits d'injection :

  - solution A : 62,7 ml/h
  - eau de dilution : pas d'injection
  - solution B : 14,2 ml/h
  - solution C : 27,2 ml/h

Les quantités suivantes ont été introduites au cours de la réaction :

|  | Composés | Masses introduites (g) |
|---|---|---|
| **Solution A** | Acide acrylique | 8,219 |
|  | Acrylate de sodium | 5,870 |
|  | Eau | 8,904 |
| **eau de dilution** |  | 0,000 |

(suite)

| | Composés | Masses introduites (g) |
|---|---|---|
| **Amorceur 1** | Métabisulfite de sodium | 1,563 |
| | Eau | 8,418 |
| **Amorceur 2** | Persulfate de sodium | 1,031 |
| | Eau | 4,183 |
| | Hydroquinone | 0,066 |

| Ratios molaires | |
|---|---|
| **Persulfate/monomère** | **2,45 %** |
| **Métabisulfite/monomère** | **4,66 %** |
| **Métabisulfite/persulfate** | **1,90** |
| **hydroquinone/persulfate** | **0,1 %** |

• Température

La température du fluide caloporteur a été fixée à 72°C.
La variation de la température dans le réacteur a été suivie au cours du temps :

- 1ère spire : 68°C
- 2ème spire : 85°C
- 3ème spire : 83°C
- 4ème spire : 71 °C
- 5ème spire jusqu'à la 30ème : 68°C

L'augmentation de la température correspond à la chaleur dégagée par la réaction de polymérisation. Le retour à une température de 68°C à partir de la 5ème spire, indique que la réaction de polymérisation est terminée à partir de cette spire, ce qui reflète que la réaction de polymérisation a ainsi été achevée en moins de 50 secondes.

1.3) Le produit obtenu (Polymère P1)

Le produit obtenu a été caractérisé par les mesures suivantes :

a) Thermobalance 115°C pendant 1 heure

| | Polymère |
|---|---|
| Extrait sec théorique | 43,7% |
| Extrait sec mesuré[a] | 45,4% |
| pH mesuré | 4,11 |
| viscosité Brookfield LVF (mPa.s) Spindle 4; Shear Rate 20 / 50 / 100 à 23 °C | - |

Le polymère obtenu P1 présente une masse $M_w$ égale à 6 550 g/mol. De plus, les analyses ont montré la présence de seulement 4,8% de produit d'addition issu de la réaction de Michael.
Ainsi, la réaction de polymérisation effectuée à un pH de 4,8, un ratio molaire métabisulfite de sodium/persulfate de sodium de 1,90 et un pourcentage molaire (métabisulfite de sodium + persulfate de sodium)/monomère de 7%, a conduit avantageusement a un polymère ayant une $M_w$ égale à 6550 g/mol, en un temps de séjour inférieur à 5 minutes.

### Exemple 2 : Préparation de polyacrylate (polymère P2)

2.1) Préparation des solutions

Les solutions A, B et C de l'exemple 1 ont été utilisées.

2.2) Polymérisation

La polymérisation a été effectuée dans les conditions suivantes :

- débits d'injection :

  - solution A : 62,7 ml/h
  - eau de dilution : pas d'injection
  - solution B : 14,2 ml/h
  - solution C : 27,2 ml/h

Les quantités suivantes ont été introduites au cours de la réaction :

|  | Composés | Masses introduites (g) |
|---|---|---|
| Monomère | Acide acrylique | 25,404 |
|  | Acrylate de sodium | 18,145 |
|  | Eau | 27,523 |
| eau de dilution |  | 0,000 |
| Amorceur 1 | Métabisulfite de sodium | 4,830 |
|  | Eau | 26,019 |
| Amorceur 2 | Persulfate de sodium | 3,188 |
|  | Eau | 12,928 |
|  | Hydroquinone | 0,066 |

| Ratios molaires | |
|---|---|
| Persulfate/monomère | 2,45 % |
| Métabisulfite/monomère | 4,66 % |
| Métabisulfite/persulfate | 1,90 |
| hydroquinone/persulfate | 0 % |

• Température

La température du fluide caloporteur a été fixée à 74°C.
La variation de la température dans le réacteur a été suivie au cours du temps :

  - 1$^{ère}$ spire : 68°C
  - 2$^{ème}$ spire : 85°C
  - 3$^{ème}$ spire : 83°C
  - 4$^{ème}$ spire : 71 °C
  - 5$^{ème}$ spire jusqu'à la 30$^{ème}$ : 68°C

Là encore, on voit qu'à partir de la 5$^{ème}$ spire, la température revient à 68°C, ce qui indique que la réaction est déjà terminée à partir de cette spire. La réaction de polymérisation a ainsi été achevée en moins de 50 secondes.

2.3) <u>Produit obtenu (Polymère P2)</u>

Le produit obtenu a été caractérisé par les mesures suivantes :

|  | Polymère |
|---|---|
| Extrait sec théorique | 43,7% |
| Extrait sec mesuré[a)] | 44,9% |
| pH mesuré | 4,12 |
| viscosité brookfield LVF (mPa.s) Spindle 4; Shear Rate 20 / 50 / 100 à 23 °C | 650/660/660 |
| a) Thermobalance 115°C pendant 1 heure | |

Le produit obtenu peut être neutralisé par l'ajout de 16,7 mL soude à 50% (pH final de 7,43). La viscosité a été une nouvelle fois mesurée à l'issue de la neutralisation : viscosité brookfield LVF (mPa.s) à 23°C (Spindle 4; Shear Rate 50 / 100) : 400/390.

Le polymère obtenu à l'issue de la neutralisation présente les caractéristiques suivantes :

| pH | 7,41 |
|---|---|
| Extrait sec (%)[a)] | 55,8 |
| viscosité brookfield LVF (mPa.s) | 380 |
| $M_W$ (g/mol) | 6900 |
| $M_n$ (g/mol) | 3136 |
| Monomère résiduel (solution acide acrylique + acrylate de sodium) | < 20 ppm |
| a) Thermobalance 115°C pendant 1 heure | |

De plus, les analyses ont montré la présence de seulement 3,2% de produit d'addition issu de la réaction de Michael.

Ainsi, la réaction de polymérisation effectuée à un pH de 4,8, un ratio molaire métabisulfite de sodium/persulfate de sodium de 1,90 et un pourcentage molaire (métabisulfite de sodium + persulfate de sodium)/monomère de 7%, a conduit avantageusement a un polymère ayant une $M_w$ égale à 6900 g/mol, en un temps de séjour inférieur à 5 minutes.

**Exemple 3 : Préparation de polyacrylate (Polymère P3)**

3.1) <u>Préparation des solutions</u>

**Solution A**

La solution de monomère est préparée par réaction d'acide acrylique (1,67 moles) avec une solution de soude aqueuse à 50% en masse, et en présence d'eau de dilution visant à empêcher la cristallisation. Le pH de la solution de monomère obtenue est de 4,46.

La composition de la solution A obtenue est la suivante :

|  | moles | grammes |
|---|---|---|
| Acrylate de sodium | 0,49 | 45,8 |
| Acide Acrylique | 1,18 | 84,9 |
| Masse d'eau | | 62,2 |

**Solution B (Amorceur 1 - Persulfate de sodium)**

Une solution aqueuse à 22,2% en poids a été préparée par dilution de persulfate de sodium (8,92 g) dans 31,2 g d'eau. La solution a été dégazée sous vide pendant 10 minutes.

**Solution C (Amorceur 2 - Métabisulfite de sodium)**

Une solution aqueuse à 17,6% en poids a été préparée par dilution de métabisulfite de sodium (10,6 g) dans 49,5 g d'eau. La solution a été dégazée sous vide pendant 10 minutes.

3.2) Polymérisation

La polymérisation a été effectuée dans les conditions suivantes :

• débits d'injection :

- solution A : 62,7 ml/h
- eau de dilution : 8,0 ml/h
- solution B : 14,2 ml/h
- solution C : 27,2 ml/h

Les quantités suivantes ont été introduites pour la réaction :

| | Composés | Masses introduites (g) |
|---|---|---|
| | Acide acrylique | 10,122 |
| Monomère | Acrylate de sodium | 5,462 |
| | Eau | 7,410 |
| eau de dilution | | 2,933 |
| Amorceur 1 | Métabisulfite de sodium | 1,757 |
| | Eau | 8,223 |
| Amorceur 2 | Persulfate de sodium | 1,160 |
| | Eau | 4,054 |
| | Hydroquinone | - |

| Ratios molaires | |
|---|---|
| Persulfate/monomère | 2,45 % |
| Métabisulfite/monomère | 4,66% |
| Métabisulfite/persulfate | 1,90 |
| hydroquinone/persulfate | 0,0% |

• Température

La température du fluide caloporteur a été fixée à 74°C.

La variation de la température dans le réacteur a été suivie au cours du temps :

- 1$^{ère}$ spire : 75°C
- 2$^{ème}$ spire : 95°C
- 3$^{ème}$ spire : 80°C
- 4$^{ème}$ spire : 71°C
- 5$^{ème}$ spire jusqu'à la 30$^{ème}$ : 66°C

Là, encore, à partir de la 5$^{ème}$ spire, la température revient à 66°C, indiquant que la réaction de polymérisation est terminée. La réaction de polymérisation a ainsi été achevée en moins de 50 secondes.

3.3) Produit obtenu (Polymère P3)

Le produit obtenu a été caractérisé par les mesures suivantes :

|  | **Polymère** |
|---|---|
| Extrait sec théorique<br>Extrait sec mesuré[a) | 45%<br>47,2% |
| pH mesuré | 3,81 |
| viscosité brookfield LVF (mPa.s)<br>Spindle 4; Shear Rate 20 / 50 / 100 à 24 °C | 550/550/550 |
| a) Thermobalance 115°C pendant 1 heure | |

Le produit obtenu a pu être neutralisé par l'ajout de 102,2 mL soude à 50% (pH final de 7,41). La viscosité a été une nouvelle fois mesurée à l'issue de la neutralisation : viscosité brookfield LVF (mPa.s) à 23°C (Spindle 4; Shear Rate 50 / 100) : 380/380.

Le polymère obtenu à l'issue de la neutralisation présente les caractéristiques suivantes :

| pH | 7,43 |
|---|---|
| Extrait sec (%)[a) | 53,7 |
| viscosité brookfield LVF (mPa.s) | 390 |
| $M_W$ (g/mol) | 5800 |
| $M_n$ (g/mol) | 2300 |
| Monomère résiduel (solution acide acrylique + acrylate de sodium) | < 20 ppm |
| b) Thermobalance 115°C pendant 1 heure | |

De plus, les analyses ont montré la présence de seulement 2,8% de produit d'addition issu de la réaction de Michael.

Ainsi, la réaction de polymérisation effectuée à un pH de 4,46, un ratio molaire métabisulfite de sodium/persulfate de sodium de 1,90 et un pourcentage molaire (métabisulfite de sodium + persulfate de sodium)/monomère de 7%, a conduit avantageusement a un polymère ayant une $M_w$ égale à 5800 g/mol, en un temps de séjour inférieur à 5 minutes.

**Exemple 4 : Préparation de polyacrylate (Polymère P4)**

4.1) Préparation des solutions

**Solution A**

La solution de monomère est préparée par réaction d'acide acrylique (6,64 moles) avec une solution de soude aqueuse à 50% en masse, et en présence d'eau de dilution visant à empêcher la cristallisation. Le pH de la solution de monomère obtenue est de 4,5.

La composition de la solution A obtenue est la suivante :

|  | moles | grammes |
|---|---|---|
| Acrylate de sodium | 2,35 | 220,9 |
| Acide Acrylique | 4,29 | 309,3 |
| d'eau |  | 268,3 |

**Solution B (Amorceur 1 - Persulfate de sodium)**

Une solution aqueuse à 20,3% en poids a été préparée par dilution de persulfate de sodium (15,2 g) dans 59,7 g d'eau. La solution a été dégazée sous vide pendant 10 minutes.

**Solution C (Amorceur 2 - Métabisulfite de sodium)**

Une solution aqueuse à 16,9% en poids a été préparée par dilution de métabisulfite de sodium (12,7 g) dans 62,3 g d'eau. La solution a été dégazée sous vide pendant 10 minutes.

4.2) Polymérisation

La polymérisation a été effectuée dans les conditions suivantes :

- débits d'injection :

    - solution A : 62,7 ml/h
    - eau de dilution : 4,2 ml/h
    - solution B : 14,2 ml/h
    - solution C : 27,5 ml/h

Les quantités suivantes ont été introduites pour la réaction :

| | Composés | Masses introduites (g) |
|---|---|---|
| Monomère | Acide acrylique | 29,553 |
| | Acrylate de sodium | 21,109 |
| | Eau | 25,635 |
| eau de dilution | | 5,098 |
| Amorceur 1 | Métabisulfite de sodium | 5,649 |
| | Eau | 27,749 |
| Amorceur 2 | Persulfate de sodium | 3,515 |
| | Eau | 13,786 |
| | Hydroquinone | 0,066 |

| Ratios molaires | |
|---|---|
| Persulfate/monomère | **2,3 %** |
| Métabisulfite/monomère | 4,7 % |
| métabisulfite/persulfate | 2 |
| hydroquinone/persulfate | 0,0 % |

• Température

La température du fluide caloporteur a été fixée à 74°C.
Il a été observé que la réaction de polymérisation a été achevée en moins de 50 secondes.

4.3) Produit obtenu

Le produit obtenu a été caractérisé par les mesures suivantes :

|  | Polymère |
|---|---|
| Extrait sec théorique<br>Extrait sec mesuré[a)] | 45,3%<br>47% |
| pH mesuré | 4,6 |
| viscosité brookfield LVF (mPa.s)<br>à 18 °C | 252 |
| a) Thermobalance 115°C pendant 1 heure | |

Le polymère obtenu P4 présente une masse $M_w$ égale à 4850 g/mol. De plus, les analyses ont montré la présence de seulement 4,8% de produit d'addition issu de la réaction de Michael.

Ainsi, la réaction de polymérisation effectuée à un pH de 4,5, un ratio molaire métabisulfite de sodium/persulfate de sodium de 2 et un pourcentage molaire (métabisulfite de sodium + persulfate de sodium)/monomère de 7%, a conduit avantageusement a un polymère ayant une $M_w$ égale à 4850 g/mol, en un temps de séjour inférieur à 5 minutes.

**Exemple 5 : Préparation de polyacrylate (polymère P5)**

5.1) Préparation des solutions

**Solution A**

La solution de monomère est préparée par réaction d'acide acrylique (15,8 moles) avec une solution de soude aqueuse à 50% en masse, et en présence d'eau de dilution visant à empêcher la cristallisation. Le pH de la solution de monomère obtenue est de 4,2.

La composition de la solution A obtenue est la suivante :

|  | moles | grammes |
|---|---|---|
| Acrylate de sodium | 3,2 | 299,8 |
| Acide Acrylique | 12,6 | 907,4 |
| eau | | 394 |

**Solution B (Amorceur 1 - Persulfate de sodium)**

Une solution aqueuse à 24,5% en poids a été préparée par dilution de persulfate de sodium (17,5 g) dans 53,9 g d'eau. La solution a été dégazée sous vide pendant 10 minutes.

**Solution C (Amorceur 2 - Métabisulfite de sodium)**

Une solution aqueuse à 20,1% en poids a été préparée par dilution de métabisulfite de sodium (14,1 g) dans 56,1 g d'eau. La solution a été dégazée sous vide pendant 10 minutes.

5.2) Polymérisation

• débits d'injection :

- solution A : 53,3 ml/h

- eau de dilution : 14 ml/h

- solution B : 15,4 ml/h

- solution C : 26 ml/h

Les quantités suivantes ont été introduites pour la réaction :

| | Composés | Masses introduites (g) |
|---|---|---|
| Monomère | Acide acrylique | 12,6 |
| | Acrylate de sodium | 4,2 |
| | Eau | 5,5 |
| eau de dilution | | 5,1 |
| Amorceur 1 | Métabisulfite de sodium | 1,9 |
| | Eau | 7,6 |
| Amorceur 2 | Persulfate de sodium | 1,4 |
| | Eau | 4,3 |
| | Hydroquinone | 0 |

| Ratios molaire | |
|---|---|
| Persulfate/monomère | 2,7% |
| Métabisulfite/monomère | 4,6% |
| métabisulfite/persulfate | 1,73 |
| hydroquinone/persulfate | 0 |

• Température

La température du fluide caloporteur a été fixée à 60°C.
Il a été observé que la réaction de polymérisation a été achevée en moins d'une minute.

5.3) Produit obtenu (Polymère P5)

Le produit obtenu a été caractérisé par les mesures suivantes :

| | Polymère |
|---|---|
| Extrait sec théorique | 47,2% |
| Extrait sec mesuré[a] | 50% |
| pH mesuré | 3,3 |
| Produit d'addition | 2% |
| a) Thermobalance 115°C pendant 1 heure | |

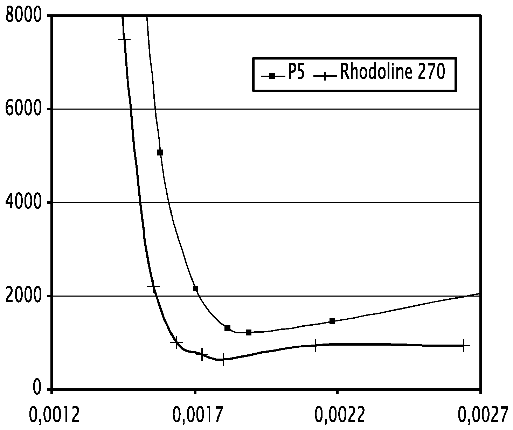

Le polymère P5 obtenu dans cet exemple présente une masse moléculaire moyenne en masse $M_w$ égale à 4 617 g/mol.
Ainsi, la réaction de polymérisation conduit à un polymère de basse masse $M_w$ comme dans les exemples précédents, avec une très faible teneur en produits d'addition de Michaël.
De plus, le polymère P6 obtenu dans cet exemple (tout comme les polymères P1 à P4 des exemples 1 à 4) présente de bonnes propriétés dispersantes. Les propriétés dispersantes de P5, notamment, sont similaires à celles d'un polymère dispersant commercial analogue, à savoir le Rhodoline® 270 disponible auprès de la société Rhodia.
Pour illustrer ces propriétés dispersantes du polymère, on a ajouté le polymère P5 dans une dispersion d'oxyde de titane (Tiona® 595 disponible auprès de la société Millenium). La figure ci-jointe illustre la diminution de viscosité observée lors de l'ajout de faibles quantités respectivement de polymère P6 et de Rhodoline® 270. La Figure indique en abscisse la concentration en polymère ajouté (%massique par rapport à la masse de TiO2) et en ordonnée la valeur de la viscosité (en cP, telle que mesurée à l'aide d'un viscosimètre Brookfield muni d'un module LV spindle 4, à 12 tours par minute).

**Exemple 6 (comparatif) : Préparation de polyacrylate (polymère P6)**

6.1) Préparation des solutions

**Solution A**

Il s'agit d'acide acrylique. Dans cet exemple, l'acide acrylique a été introduit sous une forme non préalablement diluée dans l'eau.

**Solution B (Amorceur 1 - Persulfate de sodium)**

Une solution aqueuse à 9,7% en poids a été préparée par dilution de persulfate de sodium (3,87 g) dans 36 g d'eau. La solution a été dégazée sous vide pendant 10 minutes.

**Solution C (Amorceur 2 - Métabisulfite de sodium)**

Une solution aqueuse à 33,5% en poids a été préparée par dilution de métabisulfite de sodium (16,75 g) dans 33,3 g d'eau. La solution a été dégazée sous vide pendant 10 minutes.

6.2) Polymérisation

• débits d'injection :

- solution A : 8,4 ml/h
- eau de dilution : 1,3 ml/h
- solution B : 4,8 ml/h
- solution C : 10,4ml/h

Les quantités suivantes ont été introduites pour la réaction :

|  | Composés | Masses introduites (g) |
|---|---|---|
| Monomère | Acide acrylique | 4,35 |
|  | Eau | 0,00 |
| eau de dilution |  | 0,672 |
| Amorceur 1 | Métabisulfite de sodium | 1,792 |
|  | Eau | 3,562 |
| Amorceur 2 | Persulfate de sodium | 0,239 |
|  | Eau | 2,231 |
|  | Hydroquinone | 0,115 |

| Ratios molaires |  |
|---|---|
| Persulfate/monomère | 1,7% |
| Métabisulfite/monomère | 15,6% |

(suite)

| Ratios molaires | |
|---|---|
| métabisulfite/persulfate | 8,8 |
| hydroquinone/persulfate | 1,0 |

• Température

La température du fluide caloporteur a été fixée à 90,5°C.
Le temps de séjour dans le réacteur est de plus de 20 minutes.

6.3) Produit obtenu (Polymère P6)

Le produit obtenu a été caractérisé par les mesures suivantes :

| | Polymère |
|---|---|
| Extrait sec théorique | 49,7% |
| Extrait sec mesuré[a] | 47% |
| pH mesuré | 2,1 |
| Produit d'addition | 13% |
| viscosité brookfield LVF (mPa.s) Spindle 4; Shear Rate 20 / 50 / 100 à 23 °C | 110 |
| b) Thermobalance 115°C pendant 1 heure | |

Le polymère obtenu présente une masse moléculaire moyenne en masse $M_w$ égale à 13 500 g/mol.
Ainsi, la réaction de polymérisation effectuée à un pH de 2 et un ratio molaire métabisulfite de sodium/persulfate de sodium de 8,8 conduit à un polymère de masse $M_w$ supérieure à 10 000 g/mol. De plus, les analyses ont montré la présence de 13% de produit d'addition issu de la réaction de Michael, dans le polymère obtenu.

**Exemple 7 (comparatif) : préparation du polymère P7**

7.1) Préparation des solutions

**Solution A**

La solution de monomère est préparée par réaction d'acide acrylique (1,67 moles) avec une solution de soude aqueuse à 50% en masse, et en présence d'eau de dilution visant à empêcher la cristallisation. Le pH de la solution de monomère obtenue est de 5,5.
La composition de la solution A obtenue est la suivante :

| | moles | grammes |
|---|---|---|
| Acrylate de sodium | 1,15 | 108,1 |
| Acide Acrylique | 0,52 | 37,2 |
| eau | | 137,7 |

**Solution B (Amorceur 1 - Persulfate de sodium)**

Une solution aqueuse à 15,2 % en poids a été préparée par dilution de persulfate de sodium (4,57 g) dans 25,5 g d'eau. La solution a été dégazée sous vide pendant 10 minutes.

**Solution C (Amorceur 2 - Métabisulfite de sodium)**

Une solution aqueuse à 12,0 % en poids a été préparée par dilution de métabisulfite de sodium (7,2 g) dans 52,88 g d'eau. La solution a été dégazée sous vide pendant 10 minutes.

7.2) Polymérisation

La polymérisation a été effectuée dans les conditions suivantes :

- débits d'injection :

  - solution A : 62,7 ml/h
  - eau de dilution : 0 ml/h
  - solution B : 14,2 ml/h
  - solution C : 27,2 ml/h

Les quantités suivantes ont été introduites pour la réaction :

|  | Composés | Masses introduites (g) |
|---|---|---|
| Monomère | Acide acrylique | 9,063 |
|  | Acrylate de sodium | 26,353 |
|  | Eau | 35,565 |
| eau de dilution |  | 0,0 |
| Amorceur 1 | Métabisulfite de sodium | 3,596 |
|  | Eau | 26,346 |
| Amorceur 2 | Persulfate de sodium | 2,379 |
|  | Eau | 13,263 |
|  | Hydroquinone | - |

| Ratios molaires | |
|---|---|
| Persulfate/monomère | 2,46% |
| Métabisulfite/monomère | 4,66% |
| Métabisulfite/persulfate | 1,9 |
| hydroquinone/persulfate | 0,0 |

• Température

La température du fluide caloporteur a été fixée à 74°C.

7.3) Produit obtenu

Le produit obtenu a été caractérisé par les mesures suivantes :

|  | Polymère |
|---|---|
| Extrait sec théorique | 36,1% |
| Extrait sec mesuré[a)] | 37,9% |
| pH mesuré | 4,92 |

(suite)

|  | Polymère |
|---|---|
| viscosité brookfield LVF (mPa.s)<br>Spindle 4; Shear Rate 20 / 50 / 100 à 23 °C | 1050/1040/1030 |
| a) Thermobalance 115°C pendant 1 heure | |

Le polymère obtenu P7 présente une masse $M_w$ égale à 60850 g/mol. De plus, les analyses ont montré la présence de 4,3% de produit d'addition issu de la réaction de Michael.

Ainsi, la réaction de polymérisation effectuée à un pH de 5,5, un ratio molaire métabisulfite de sodium/persulfate de sodium de 1,9 et un pourcentage molaire (métabisulfite de sodium + persulfate de sodium)/monomère de 7%, a conduit à un polymère ayant une $M_w$ élevée, à savoir de 60 850 g/mol.

**Revendications**

1. Procédé de préparation d'un polymère comprenant une étape de polymérisation radicalaire de monomères comprenant au moins des monomères (M1) choisis parmi l'acide acrylique, l'un de ses sels, ou leur mélange, dans lequel ladite étape de polymérisation radicalaire est réalisée :

   - en continu ;
   - à un pH qui reste compris de 3 à 5 durant l'étape de polymérisation ;
   - en présence d'un couple redox métabisulfite/persulfate, par exemple le couple métabisulfite de sodium/persulfate de sodium, à titre d'amorceur radicalaire, avec un ratio molaire métabisulfite/persulfate compris de 1 à 3,5 et un pourcentage molaire amorceur/monomères compris de 5% à 18%.

2. Procédé selon la revendication 1, dans lequel le pH est compris de 3,5 à 5, de préférence de 4,0 à 5, et préférentiellement de 4,4 à 4,9.

3. Procédé selon la revendication 1 ou 2, dans lequel le ratio molaire métabisulfite de sodium/persulfate de sodium est compris de 1 à 2,5, ce ratio étant préférentiellement inférieur ou égal à 2.

4. Procédé selon l'une quelconque des revendications 1 à 3, dans lequel le pourcentage molaire est compris de 3% à 10%, préférentiellement de 6% à 8,5%.

5. Procédé selon l'une quelconque des revendications 1 à 4, dans lequel l'étape de polymérisation est réalisée à une température qui reste comprise de 30°C à 100°C pendant toute la durée de la polymérisation.

6. Procédé selon l'une quelconque des revendications 1 à 5, dans lequel la polymérisation est effectuée dans un réacteur tubulaire, un réacteur à plaques ou un micro-réacteur adapté.

7. Procédé selon la revendication 6, dans lequel le réacteur tubulaire comprend au moins un mélangeur statique.

8. Procédé selon l'une quelconque des revendications 1 à 7, dans lequel l'étape de polymérisation est conduite avec un temps de séjour de moins de 5 minutes, de préférence de moins de 2 minutes, et préférentiellement de moins de 50 s.

9. Procédé selon l'une quelconque des revendications 1 à 8, dans lequel le polymère obtenu a une masse molaire moyenne en masse mesurée par GPC MALS comprise de 1 000 g/mol à 10 000 g/mol, de préférence de 1 500 g/mol à 7 500 g/mol, et préférentiellement de 2 000 g/mol à 6 000 g/mol.

10. Procédé selon l'une quelconque des revendications 1 à 9, dans lequel le polymère obtenu est soumis à une étape supplémentaire de post-traitement en présence d'additifs, de biocides ou de bases, telles que NaOH.

11. Procédé selon l'une quelconque des revendications 1 à 10, dans lequel la réaction de polymérisation radicalaire est réalisée en présence d'au moins un monomère (M2), ledit monomère (M2) étant différent du monomère (M1).

**12.** Procédé selon la revendication 11, dans lequel le monomère (M2) est un monomère possédant une ou plusieurs fonctions ou groupes choisis dans le groupe constitué de: acide carboxylique; sulfonate ; sulfate ; phosphonate ; phosphate ; hydroxyle ; amine primaire, secondaire, tertiaire ou quaternaire ; lactame ; amide ; éthylène glycol ou oxyde de polyalkylène ; carboxybétaïne, sulfobétaïne et phosphobétaïnes.

**Patentansprüche**

**1.** Verfahren zur Herstellung eines Polymers, umfassend einen Schritt der Radikalpolymerisation von Monomeren, die mindestens Monomere (M1), die aus Acrylsäure, einem Salz davon oder einer Mischung davon ausgewählt werden, umfasst, wobei der Radikalpolymerisationsschritt:

- kontinuierlich;
- bei einem pH-Wert, der während des Polymerisationsschritts bei einem Wert von 3 bis 5 bleibt;
- in Gegenwart eines Metabisulfit/Persulfat-Redoxpaars, beispielsweise des Natriummetabisulfit/Natriumpersulfat-Paars, als Radikalinitiator mit einem Metabisulfit/Persulfat-Molverhältnis von 1 bis 3,5 und einem Initiator/Monomere-Molprozentanteil von 5% bis 18%;

durchgeführt wird.

**2.** Verfahren nach Anspruch 1, bei dem der pH-Wert 3,5 bis 5, vorzugsweise 4,0 bis 5 und bevorzugt 4,4 bis 4,9 beträgt.

**3.** Verfahren nach Anspruch 1 oder 2, bei dem das Natriummetabisulfit/Natriumpersulfat-Molverhältnis 1 bis 2,5 beträgt, wobei dieses Verhältnis vorzugsweise kleiner oder gleich 2 ist.

**4.** Verfahren nach einem der Ansprüche 1 bis 3, bei dem der Molprozentanteil 3% bis 10%, vorzugsweise 6% bis 8,5%, beträgt.

**5.** Verfahren nach einem der Ansprüche 1 bis 4, bei dem der Polymerisationsschritt bei einer Temperatur durchgeführt wird, die über die gesamte Dauer der Polymerisation bei 30°C bis 100°C bleibt.

**6.** Verfahren nach einem der Ansprüche 1 bis 5, bei dem die Polymerisation in einem Rohrreaktor, einem Plattenreaktor oder einem passenden Mikroreaktor durchgeführt wird.

**7.** Verfahren nach Anspruch 6, bei dem der Rohrreaktor mindestens einen statischen Mischer umfasst.

**8.** Verfahren nach einem der Ansprüche 1 bis 7, bei dem der Polymerisationsschritt mit einer Verweilzeit von weniger als 5 Minuten, vorzugsweise weniger als 2 Minuten und bevorzugt weniger als 50 s durchgeführt wird.

**9.** Verfahren nach einem der Ansprüche 1 bis 8, bei dem das erhaltene Polymer eine durch GPC-MALS gemessene gewichtsmittlere Molmasse von 1000 g/mol bis 10.000 g/mol, vorzugsweise von 1500 g/mol bis 7500 g/mol und bevorzugt 2000 g/mol bis 6000 g/mol aufweist.

**10.** Verfahren nach einem der Ansprüche 1 bis 9, bei dem das erhaltene Polymer einem zusätzlichen Nachbehandlungsschritt in Gegenwart von Additiven, Bioziden oder Basen, wie NaOH, unterworfen wird.

**11.** Verfahren nach einem der Ansprüche 1 bis 10, bei dem die Radikalpolymerisationsreaktion in Gegenwart von mindestens einem Monomer (M2) durchgeführt wird, wobei das Monomer (M2) von dem Monomer (M1) verschieden ist.

**12.** Verfahren nach Anspruch 11, bei dem es sich bei dem Monomer (M2) um ein Monomer mit einer oder mehreren Funktionen oder Gruppen, die aus der Gruppe bestehend aus Carbonsäure; Sulfonat; Sulfat; Phosphonat; Phosphat; Hydroxyl; primärem, sekundärem, tertiärem oder quaternärem Amin; Lactam; Amid; Ethylenglykol oder Polyalkylenoxid; Carboxybetain, Sulfobetain und Phosphobetainen ausgewählt sind, handelt.

**Claims**

1. Process for preparing a polymer comprising a step of radical polymerization of monomers comprising at least monomers (M1) selected from acrylic acid, a salt thereof, or a mixture thereof, in which said radical polymerization step is carried out:

   - continuously;
   - at a pH which remains included from 3 to 5 during the polymerization step;
   - in the presence of a metabisulfite/persulfate redox couple, for example the sodium metabisulfite/sodium persulfate couple, as a radical initiator, with a metabisulfite/persulfate molar ratio included from 1 to 3.5 and an initiator/monomer molar percentage included from 5% to 18%.

2. Process according to Claim 1, wherein the pH is included from 3.5 to 5, preferably from 4.0 to 5 and preferentially from 4.4 to 4.9.

3. Process according to Claim 1 or 2, wherein the sodium metabisulfite/sodium persulfate molar ratio is included from 1 to 2.5, this ratio being preferentially less than or equal to 2.

4. Process according to any one of Claims 1 to 3, wherein the molar percentage is included from 3% to 10%, preferentially from 6% to 8.5%.

5. Process according to any one of Claims 1 to 4, wherein the polymerization step is carried out at a temperature which remains included from 30°C to 100°C throughout the polymerization.

6. Process according to any one of Claims 1 to 5, wherein the polymerization is carried out in a tubular reactor, a plate reactor or a microreactor which is appropriate.

7. Process according to Claim 6, wherein the tubular reactor comprises at least one static mixer.

8. Process according to any one of Claims 1 to 7, wherein the polymerization step is carried out with a residence time of less than 5 minutes, preferably of less than 2 minutes and preferentially of less than 50 s.

9. Process according to any one of Claims 1 to 8, wherein the polymer obtained has a weight-average molar mass, measured by GPC MALS, included from 1000 g/mol to 10 000 g/mol, preferably from 1500 g/mol to 7500 g/mol and preferentially from 2000 g/mol to 6000 g/mol.

10. Process according to any one of Claims 1 to 9, wherein the polymer obtained is subjected to an additional post-treatment step in the presence of additives, of biocides or of bases, such as NaOH.

11. Process according to any one of Claims 1 to 10, wherein the radical polymerization reaction is carried out in the presence of at least one monomer (M2), said monomer (M2) being different than the monomer (M1).

12. Process according to Claim 11, wherein the monomer (M2) is a monomer which has one or more functions or groups selected from the group consisting of: carboxylic acid; sulfonate; sulfate; phosphonate; phosphate; hydroxyl; primary, secondary, tertiary or quaternary amine; lactam; amide; ethylene glycol or polyalkylene oxide; carboxybetaine, sulfobetaine and phosphobetaines.